Europäisches Patentamt

European Patent Office

Office européen des brevets

(19)

(11) Publication number: **0 103 118**
**B1**

(12) **EUROPEAN PATENT SPECIFICATION**

(45) Date of publication of patent specification: **05.03.86**

(51) Int. Cl.⁴: **C 08 F 220/18, C 09 D 3/81**

(21) Application number: **83107290.5**

(22) Date of filing: **25.07.83**

(54) **High solids primer-guidecoats based on t-butyl acrylate and styrene.**

(30) Priority: **26.07.82 US 401716**

(43) Date of publication of application:
**21.03.84 Bulletin 84/12**

(45) Publication of the grant of the patent:
**05.03.86 Bulletin 86/10**

(84) Designated Contracting States:
**AT BE CH DE FR GB IT LI LU NL SE**

(56) References cited:
**FR-A-2 072 508**
**FR-A-2 146 220**
**FR-A-2 279 781**

(73) Proprietor: **UNION CARBIDE CORPORATION**
**39 Old Ridgebury Road**
**Danbury Connecticut 06817 (US)**

(72) Inventor: **Koleske, Joseph Victor**
**1513 Brentwood Road**
**Charleston West Virginia 25314 (US)**
Inventor: **Sherwin, Maynard Arthur**
**563 Edgehill Drive**
**St. Albans West Virginia 25177 (US)**

(74) Representative: **Wuesthoff, Franz, Dr.-Ing. et al**
**Patentanwälte Wuesthoff -v. Pechmann-**
**Behrens-Goetz Schweigerstrasse 2**
**D-8000 München 90 (DE)**

Courier Press, Leamington Spa, England.

**Description**

Background of the invention

Automobile bodies and related products are generally treated with three different coatings: primer, guide coat and topcoat. The primer is usually applied by electrodeposition or dip-coating and the guide coat and topcoat spray applied. Because the guide coat is usually more highly pigmented than the primer it does not follow the substrate surface contours as closely and therefore provides a smoother surface for sanding. This sanding of the guide coat greatly improves the gloss and distinctiveness-of-image of the topcoat. Moreover, because electrodeposited primers are relatively thin and very soft before baking they are subject to damage and thus the guide coat must also provide corrosion protection to such damaged areas nearly as well as the primer.

Most of the guide coats in use today are low solids solvent coatings, such as epoxy-based systems. However, due to the increasing awareness of the environmental dangers posed by solvents as well as increasing solvent costs there is dissatisfaction with such low solids systems. In addition, the guide coat compositions in use today generally employ metals, such as lead or chromium, which are environmentally unfavorable in order to protect against corrosion.

Although coatings containing polymers comprising t-butyl acrylate and styrene (among other monomers) are disclosed in GB—A—1,556,456 and 1,556,464, these copolymers possess high glass transition temperatures, having a Durran softening point of 90—120°C. Thus, as is apparent to one skilled in the art, these coatings must be applied as either (1) powders or (2) low-solids solutions, since high-solids coatings containing such polymers would be too highly viscous to be utile. Therefore coatings employing these polymers are comparatively uneconomical as the use of powders would necessitate the formation of relatively thick coatings (of at least about 38.1 μm) while the use of a low solids solution would require the employment of relatively large amounts of solvent.

FR—A—20 72 508 discloses the production of copolymers used in finishing powders in coating processes. The copolymers have a glass transition point of from 5° to 60°C and are derived from (A) a $C_{1-14}$ alkyl ester of (meth)acrylic acid; (B) (1) ethylenic α,β-unsaturated mono- or dicarboxylic acids or anhydrides, or (2) glycidyl (meth)acrylate; and optionally (C) an ethylenically mono-unsaturated monomer copolymerizable with (A) and (B). Component (A) encompasses a broad number of monomers including t-butyl acrylate. Component (C) encompasses a broad number of monomers including styrene.

It would therefore be of great use to find a high solids coating for use as a guide coat which would provide corrosion protection as well as a satisfactory surface for sanding. In addition, it would also be desirable to have a coating that would be applicable in a form which is commercially useful.

It has now been surprisingly discovered that copolymers of t-butyl acrylate and styrene, which have been crosslinked by means well known to one skilled in the art, may be formulated into high solids coatings which provide a high degree of corrosion resistance to steel substrates without the need for toxic inhibitive pigments containing chromates or lead. These coatings possess a high surface hardness which renders them sandable for improved appearance and have an excellent adhesion to typical topcoats.

Thus, it was completely unexpected that polymers of t-butylacrylate and styrene could be produced which had comparatively low glass transition temperatures (i.e., of less than about 50°C) and which would additionally possess sufficient hardness to be employed as a guide coat.

Description of the invention

This invention is directed to copolymers, and to coating compositions containing such copolymers, which provide a high degree of corrosion resistance to steel substrates and which possess a high surface hardness.

These coating compositions are made up of copolymers which are comprised of:

(a) from 10 to 90 weight percent, preferably from 20 to 70 weight percent, of t-butyl acrylate units;

(b) from 5 to 50 weight percent, preferably from 10 to 40 weight percent, of styrene units; and

(c) from 1 to 30 weight percent, preferably from 5 to 20 weight percent of functional comonomer units containing at least one active site, which is capable of reacting with a crosslinker such that a crosslink is produced; and

(d) from 0 to 85 weight percent, preferably from 5 to 50 weight percent, of units of ethylenically unsaturated monomers which are capable of polymerizing with t-butyl acrylate and styrene.

The term active site refers to a location on the comonomer which is capable of reacting with the crosslinker selected such that a crosslink is produced. Among the preferred active site containing comonomers which may be employed are those which, when reacted with t-butyl acrylate and styrene will produce a copolymer possessing active carboxyl, hydroxyl, or amide group, or mixtures thereof. Illustrative of such carboxyl group producing monomers are α,β-unsaturated carboxylic acids such as, for example, acrylic acid, methacrylic acid, α-chloroacrylic acid, itaconic acid, crotonic acid, aconitic acid, maleic acid, and fumeric acid. Half acid esters of the dicarboxylic acids can also be used, such as methyl hydrogen itaconate, butyl hydrogen itaconate, or ethyl hydrogen maleate. Mixtures of these acids can also be used. The preferred carboxyl group producing monomers are acrylic acid and methyacrylic acid.

Illustrative of active hydroxyl group producing monomers are mono- and polyhydroxyl alkyl esters of acrylic acid and methacrylic acid such as 2-hydroxyethyl acrylate and methacrylate, 2-hydroxypropyl

2

acrylate and methacrylate, 3-hydroxypropyl acrylate and methacrylate, 2-hydroxybutyl acrylate and methacrylate, 3-hydroxybutyl acrylate and methacrylate, 4-hydroxybutyl acrylate and methacrylate, 5-hydroxyamyl acrylate and methacrylate, 6-hydroxyhexyl acrylate and methacrylate, 8-hydroxyoctyl acrylate and methacrylate, 2,3-dihydroxypropyl acrylate and methacrylate, and 2,3-dihydroxybutyl acrylate and methacrylate. Mixtures of these hydroxyalkyl esters can also be used. The preferred hydroxyalkyl esters are hydroxyethyl acrylate, hydroxyethyl methacrylate, hydroxypropyl acrylate, and hydroxypropyl methacrylate.

Illustrative of active amide group producing monomers are monomers such as acrylamide and methacrylamide.

Illustrative of other ethylenically unsaturated monomers which are capable of polymerization with t-butyl acrylate and styrene, and which may be incorporated into the copolymer are acrylic esters and methacrylic esters such as methyl acrylate, ethyl acrylate, propyl acrylate, isopropyl acrylate, butyl acrylate, isobutyl acrylate, sec-butyl acrylate, n-amyl acrylate, isoamyl acrylate, hexyl acrylate, 2-ethylhexyl acrylate, octyl acrylate, 3,5,5-trimethylhexyl acrylate, decyl acrylate, dodecyl acrylate, hexadecyl acrylate, octadecyl acrylate, octadecenyl acrylate, n-amyl methacrylate, sec-amyl methacrylate, hexyl methacrylate, 2-ethylbutyl methacrylate, octyl methacrylate, 3,5,5-trimethylhexyl methacrylate, decyl methacrylate, dodecyl methacrylate, hexadecyl methacrylate, octadecyl methacrylate, butoxyethyl acrylate or methacrylate or other alkoxyethyl acrylate or methacrylate, methyl methacrylate, ethyl methacrylate, propyl methacrylate, isopropyl methacrylate, butyl methacrylate, sec-butyl methacrylate, and t-butyl methacrylate, t-amyl methacrylate, t-amyl acrylate, cyclohexyl acrylate or methacrylate; as well as other ethylenically unsaturated monomers, such as ethylene, butadiene, vinyl chloride, vinylidene chloride, vinyl acetate, acrylonitrile, or methacrylonitrile.

The polymers should be produced such that they possess an average molecular weight of from 1,000 to 25,000, preferably of from 3,000 to 15,000. These polymers should possess a glass transition temperature of less than about 50°C, preferably less than about 40°C.

Typically, the copolymers employed in the compositions of the instant invention are prepared by reacting a monomer feed mix (containing t-butyl acrylate, styrene, a functional comonomer having at least one active site, and optionally other ethylenically unsaturated monomers) with a catalyst feed mixture at an elevated temperature.

The polymers of this invention may be prepared by any standard polymerization process including free radial and anionic. However, a telomerization process wherein a monomer which is a chain transfer agent such as a mercaptan is incorporated into the copolymer is preferred. Illustrative of the mercaptan chain-transfer agents which may be employed are butyl mercaptan, mercaptoacetic acid, mercaptoethanol, 3 - mercapto - 1,2 - propanediol and 2 - methyl - 2 - propanethyol, t-dodecyl mercaptan, phenyl mercaptan, pentaerythritol tetramercaptopropionate, octyldecyl mercaptan and tetradecyl mercaptan.

The catalyst employed in the polymerization reaction is typically a free radical initiator or a redox catalyst. One can mention, as merely illustrative of suitable catalysts which can be employed, free radicals initiators such as hydrogen peroxide, peracetic acid, t-butyl hydroperoxide, di-t-butyl peroxide, dibenzoyl peroxide, benzoyl hydroperoxide, 2,4-dichlorobenzoyl peroxide, 2,5 - dimethyl - 2,5 - bis - (hydroperoxy)-hexane, perbenzoic acid, t-butyl peroxypivalate, t-butyl peracetate, azo-bis-isobutylonitrile, ammonium persulfate, potassium persulfate, sodium perphosphate, potassium perphosphate and isopropyl peroxycarbonate; and redox catalyst systems such as sodium persulfate-sodium formaldehyde sulfoxylate, cumene hydroperoxide-sodium metabisulfite, hydrogen peroxide-ascorbic acid and sulfur dioxide-ammonium persulphate.

The catalysts are employed in the usual catalytically effective concentrations which are known to those skilled in the art of polymerization.

The polymerization is typically carried out in the presence of an organic solvent which will not interfere with the polymerization reaction. Illustrative of the solvents which may be employed are ethoxyethyl acetate, methylene chloride, ethanol, iso-propanol, n-propanol, n-butanol, iso-butanol, tert.-butanol; the methyl, ethyl, propyl or butyl esters of acetic acid; acetone, methyl ethyl ketone, benzene and toluene.

The reaction may be carried out at a temperature of from 50°C to 160°C, with a preferred temperature of from 90°C to 130°C. The reaction may be performed at sub- or superatmospheric pressures, with atmospheric pressure being preferred.

Reaction time is not critical and may vary from less than several hours to several days or more depending upon the reaction batch size, pressure, and temperature selected.

The coating compositions of this invention comprise mixtures of (1) the novel t-butyl acrylate/styrene/functional monomer/(optionally other ethylenically unsaturated monomer) copolymer of the instant invention, (2) a suitable crosslinker and (3) suitable additives that are known to one skilled in the art of coating formulations. Illustrative of such additives are pigments and fillers, such as titanium dioxide; flow and leveling aids such as silicone surfactants, fluorocarbon based surfactants and pigment dispersants. These coating compositions may be blended by means well known to one skilled in the art. The novel compositions of this invention may be formulated into high solids coatings, i.e., as much as 75 weight percent or higher, although this figure may vary in accordance with the solvent selected, the viscosity desired and application temperature.

The crosslinkers which may be employed will vary with the type of functional crosslinking sites on the

3

copolymer copolymer employed. Thus, for copolymers containing active hydroxyl groups crosslinkers including polyepoxides (such as cycloaliphatic epoxides and diglycidyl epoxides), polyfunctional isocyanates, etherated amino-formaldehyde resins and mixtures thereof may be employed. For copolymers containing active carboxyl groups crosslinkers including including polyepoxides (such as cycloaliphatic epoxides and diglycidyl epoxides), aziridines, carbodiimides, etherated amino-formaldehyde resins and mixtures thereof may be employed. For copolymers containing active amide groups, crosslinkers including polyfunctional isocyanates, polyepoxides (such as cycloaliphatic epoxides and diglycidyl epoxides), etherated amino-formaldehyde resins and mixtures thereof may be employed. For copolymers which contain mixtures of active hydroxyl carboxyl and/or amide groups, mixtures of suitable crosslinkers may be utilized. Preferred crosslinkers include polyepoxides and etherated amino-formaldehyde resins, as these crosslinkers are reactive with active hydroxyl, carboxyl and amide groups.

Illustrative of the polyfunctional isocyanates which may be employed for copolymers containing active hydroxyl and/or amide sites are 3,5,5 - trimethyl - 1 - isocyanato - 3 - isocyanatomethyl - cyclohexane, di(2 - isocyanatoethyl) - bicyclo(2.2.1) - hept - 5 - ene - 2,3 - dicarboxylate, 2,4 - tolylene diisocyanate, 2,6 - tolylene diisocyanate, 4,4' - diphenylmethane diisocyanate, dianisidine diisocyanate, tolidine diisocyanate, hexamethylene diisocyanate, the m- and p-xylylene diisocyanates, tetramethylene diisocyanate, dicyclohexyl - 4,4' - methane diisocyanate, cyclohexane - 1,4 - diisocyanate, 1,5 - naphthylene diisocyanate, 4,4' - diisocyanate diphenyl ether, 2,4,6 - triisocyanate toluene, 4,4',4'' - triisocyanate triphenyl methane, diphenylene - 4,4 - diisocyanate, and the polymethylene polyphenylisocyanates.

Illustrative of the polyepoxides which may be employed are the cycloaliphatic epoxides which are described in U.S. Patents No. 3,027,357, No. 2,890,194 and No. 2,890,197 (especially column 7, line 11 to column 7, line 38 of No. 3,027,357), including 3,4 - epoxycyclohexylmethyl - 3,4 - epoxycyclohexane carboxylate, bis(3,4 - epoxycyclohexylmethyl)adipate, bis(2,3 - epoxycyclopentyl)ether, vinyl cyclohexene dioxide, 2 - (3,4 - epoxycyclohexyl) - 5,5 - spiro(2,3 - epoxycyclohexane) - m - dioxane, bis(3,4 - epoxycyclohexylmethyl)adipate, endo- and exo-dicyclopentadiene diepoxide and limonene, diepoxide.

Illustrative of the amino-formaldehyde resins which are useful are hexabismethoxymethylmelamine, dimethylol ethylene urea, tetramethylol acetylene diurea, tris methoxymethylmelamine, various methyl, butyl, isobutyl ethers of melamine-formaldehyde adducts, various methyl, butyl and isobutyl ethers of benzoguanamineformaldehyde.

In general, the amount of crosslinker will be dependent on the equivalent weight of the crosslinker used, the inherent flexiblity of the crosslinker used, the reactivity of the crosslinker with itself, and the degree of hardness/softness or flexibility desired in the final coating. These amounts will vary with the particular functional monomer and crosslinker combination selected and will be known to one skilled in the art.

The catalyst employed in the crosslinking reaction, if indeed a catalyst is required for the given active site/crosslinker combination, will vary in accordance with the particular active site/crosslinker combination chosen. The amounts and types of catalysts necessary will be well known to one skilled in the art. Thus, for example with etherated amine-formaldehyde resin crosslinkers catalysts such as p-toluene sulfonic acid, naphthalene sulfonic acid, phosphoric acid, dinonyl naphthalene disulfonic acid, or the stannous salt of trifluoromethane sulfonic acid can be used. With cycloaliphatic epoxides catalysts such as stannous octanoate, dibutyltin dilaurate, triflic acid, the reaction product of triflic acid and stannous oxide, diethyl ammonium triflate can be used.

Although particularly useful as guide coats, the compositions of the instant invention may also be used on any surface in which their sanding and/or anticorrosive properties may be taken advantage of.

Example 1

A t-butyl acrylate/styrene/n-butyl acrylate/2-hydroxyethyl acrylate cotelomer was prepared for use in a coating formulation in the following manner. Two feed mixtures were prepared from the following ingredients.

| Monomer feed mixture | | Catalyst feeding mixture | |
|---|---|---|---|
| Styrene | 120g | VAZO-52* | 10g |
| t-Butyl acrylate | 267g | 2-Ethoxyethyl acetate | 113g |
| n-Butyl acrylate | 138g | | |
| 2-Hydroxyethyl acrylate | 75g | | |
| t-dodecyl mercaptan | 18g | | |
| 2-Ethoxyethyl acetate | 43g | | |

*VAZO-52=2,2'-azobis(2,4-dimethylvaleronitrile)

4

The cotelomerization was carried out in a 2-liter resin kettle equipped with a stirrer, reflex condenser, temperature controller, separate monomer and catalyst feed lines controlled with volumetric displacement pumps, and a sampling tube. The kettle was charged with 44g of ethoxyethyl acetate and heated to 110°C. Then the catalyst feed was started. Ten minutes later the monomer feed was started. After 173 minutes all of the monomer mixture had been fed to the reactor, and the catalyst feed was completed after another 12 minutes. During the feed period the temperature was maintained between 105°C and 124°C. The reaction mixture was then cooked out for an additional 114 minutes at 113—114°C at which time the heat was turned off. The solution of cotelomer in 2-ethoxyethyl acetate was allowed to cool to room temperature and then the 800 grams of a golden-yellow colored solution of cotelomer had a Ubbelohde viscosity of 1860 mm$^2$/s at 30°C and a glass transition temperature of 5°C as measured by a differential scanning calorimeter.

Comparative experiment A

A t-butyl acrylate/ethyl acrylate/acrylic acid cotelomer was prepared for use in a coating formulation in the following manner. Two feed mixtures were prepared from the following ingredients.

| Monomer feed mixture | | Catalyst feeding mixture | |
| --- | --- | --- | --- |
| t-Butyl acrylate | 360g | VAZO-52 | 10g |
| Ethyl acrylate | 150g | Ethoxyethyl acetate | 113g |
| Acrylic acid | 90g | | |
| 2-Ethoxyethyl acetate | 43g | | |
| t-Dodecyl mercaptan | 18g | | |

The cotelomerization was carried out in a 2-liter, glass resin kettle equipped with a stirrer, reflux condenser, temperature controller, separate monomer and catalyst feed lines, and a sampling tube in the following manner. 44 grams of 2-ethoxyethyl acetate (kettle charge) were charged to the reactor and heated to 117°C. Then the catalyst feed was started. 10 minutes later the monomer feed was started. After 175 minutes, all of the monomer mixture had been fed to the reactor; and 15 minutes later the feeding of the catalyst mixture was complete. During this time the temperature was maintained at 110 to 124°C. The reaction mixture was then cooked out for another 58 minutes at 113—114°C. at which time the heat was turned off. The solution of cotelomer in 2-ethyoxyethanol acetate was allowed to cool to room temperature and then 800 grams of a golden-yellow colored solution were collected as a residue product. Duplicate analyses indicated that the solution contained 74.3% of the cotelomer. The solution of cotelomer had a Brookfield viscosity of 13,000—14,000 mPa · s at room temperature. It had a weight average molecular weight of 10,000 as determined by gel permeation chromatography using a calibration based on polystyrene.

Example 2

A t-butyl acrylate/i-propyl acrylate/styrene/2-hydroxyethyl acrylate cotelomer was prepared in a manner similar to Example 1. The feed mixtures were prepared from the following ingredients:

| Monomer feed mixture | |
| --- | --- |
| Styrene | 85.4g |
| t-butyl Acrylate | 36.3g |
| i-propyl Acrylate | 252g |
| 2-hydroxyethyl Acrylate | 53.4g |
| 5-dodecyl mercaptan | 12.8g |
| 2-ethoxyethyl Acetate | 24.6g |

| Catalyst feed mixture | |
| --- | --- |
| VAZO-52 | 7.1g |
| 2-ethoxyethyl acetate | 80.4g |

5

Kettle charge

| | |
|---|---|
| 2-ethoxyethyl acetate | 31.3g |

The residue product, 71.8% solids, had a Ubbelohde viscosity of 2631.6 mm$^2$/s and a glass transition temperature of 0°C.

Example 3

A stable, one-package, high solids guide coat was prepared with the cotelomer resin described in Example 1. A pigment grind was prepared by adding the following list of ingredients to a ball mill and grinding overnight to give a fineness of grind of >7 on a Hegman gauge.

Pigment grind

| | |
|---|---|
| Ex. 1 cotelomer solution (70.95% total solids) | 200g |
| Rutile TiO$_2$ | 42.6g |
| Barium sulfate | 200.8g |
| Aluminum silicate | 156.8g |
| Attapulgite clay | 4.16g |
| Carbon black | 1.79g |

After grinding, the pigment grind was removed, the ball mill was washed with 33 g of 2-ethoxyethyl acetate which was added to the grind. The paint formulation was made of the following ingredients.

Guide coat formulation

| | |
|---|---|
| Pigment grind | 150g |
| etherated amine-formaldehyde | 11.3g |
| 2-ethoxyethyl acetate | 2.75g |

*Cymel 325™, American Cyanamid, a commercially available product

This formulation contained 65.8% solids and had a #2 Zahn Cup viscosity of 25.8 s. The coating was applied by conventional air spray techniques onto 76 · 229 mm$^2$ 0,95 mm unpolished Parker steel test panels pretreated with a corrosion prohibiting pretreatment, Bonderite EP-1/P-60™ Parker. The lower half of the panel had been sanded to bare metal prior to application of the guide coat. The panels were baked for 30 minutes at 160°C in a forced air oven to give a dry film thickness of 30.5—35.6 μm.

The guide-coated panels were sanded to the thickness showing in Table II, below, and top coated with a topcoat which consisted of 55 weight percent DuPont Lucite Acrylic Lacquer White Wald—3967 and 45 weight percent 3840 STD Red Acrylic Thinner (Grow Group, Inc.) (both of which are commercially available products). The thickness of the topcoat applied is listed in Table II.

Comparative experiment B

A two-package, high solids coating of the cotelomer prepared and described in Comparative Experiment A was prepared in the same manner as described in Example 3. The ingredients used were as follows:

**0 103 118**

| Pigment grind | |
| --- | --- |
| Exp. A cotelomer solution (74.3% total solids) | 75g |
| Rutile titanium dioxide | 20.6g |
| Barium sulfate | 97g |
| Aluminum silicate | 75.8g |
| Attapulgite clay | 1.96g |
| Carbon black | 0.79g |
| 2-ethoxyethyl acetate | 100g |

| Paint formulation | |
| --- | --- |
| Pigment grind | 200g |
| ERL-4221* | 22.9g |
| Stannous octanoate | 0.13g |
| 2-ethoxyethyl acetate | 19g |

*ERL-4221=3,4-epoxycyclohexyl-methyl-3,4-epoxycyclohexane carboxylate

This paint formulation, which contained 65.5% total solids and had a #2 Zahn Cup viscosity of 26.7 seconds, was then air sprayed onto Bonderite EP-1/P-60 Parker test panels as described in Example 3 and cured in a forced air oven at 160°C for 30 minutes.

The panels were then sanded and topcoated as described in Example 3 above.

Example 4

A one package, high solids guide coat was prepared from the cotelomer described in Example 2 in the same manner as described in Example 3. The ingredients used were as follows:

| Pigment grind | |
| --- | --- |
| Ex. 3 cotelomer solution (71.8% total solids) | 100g |
| Rutile titanium dioxide | 21.6g |
| Barium sulfate | 101.5g |
| Aluminum silicate | 79.3g |
| Attapulgite clay | 2.1g |
| Carbon black | 0.9g |
| 2-ethoxyethyl acetate | 100g |

| Paint formulation | |
| --- | --- |
| Pigment grind, 70.6% total solids | 150g |
| 2-ethoxyethyl acetate | 18g |
| etherated amine-formaldehyde* | 11.4g |

*Cymel 325™

7

# 0 103 118

This paint formulation, which contained 65.4% total solids and had a #2 Zahn Cup viscosity of 26.5 seconds, was then air sprayed onto Bonderite EP-1/P-60 Parker test panels as described in Example 3 and they were cured in a forced-air oven at 160°C for 30 minutes.

The panels were then sanded and topcoated as described in Example 3, above.

Comparative experiment C

In order to compare the coatings of the instant invention against a commercially employed guidecoat, Inmont #2 was sprayed on test panels as described in Example 3. The panels were then heat cured, sanded and topcoated as described in Example 3 above.

The formulation of Examples 3 and 4 and of Comparative Example B and C were tested for their utility as guide coats by the following means:

Salt Spray ASTM-B117—57T

This test was conducted briefly as follows:

Panels were scribed from top to bottom corner and subjected to continuous exposure of 5 percent salt fog at 34.4±1.1°C. After exposure for a given interval of time the coating was scratched along the scribe to remove any loosely bound coating and rated for Scribe, Field and Blush according to the rating system shown in Table I. A higher rating number indicated better performance. Scribe (S) indicated the extent of rusting along the scribe line, Field (F) indicates the face rusting on the panel, and Blush (B) gives the extent of delamination of the coating along the scribe. The difference between S and B is that while the former represents the delamination of the film over the rusted area, the latter represents the delamination over the rusted as well as the non-rusted area.

TABLE I

Salt spray rating system for corrosion resistance evaluation
(a): Scribe and blush

| | Scribe | | Blush | |
|---|---|---|---|---|
| Rating number | Measurement of failure (rusted area) from the scribe | | Measurement of failure (rusted+non-rusted area) from the scribe | |
| | in. | mm | in. | mm |
| 10 | 0 | 0 | 0 | 0 |
| 9 | 1/64 | 0.4 | 1/64 | 0.4 |
| 8 | 1/32 | 0.8 | 1/32 | 0.8 |
| 7 | 1/16 | 1.6 | 1/16 | 1.6 |
| 6 | 1/8 | 3.2 | 1/8 | 3.2 |
| 5 | 3/16 | 4.8 | 3/16 | 4.8 |
| 4 | 1/4 | 6.4 | 1/4 | 6.4 |
| 3 | 3/8 | 9.5 | 3/8 | 9.5 |
| 2 | 1/2 | 12.7 | 1/2 | 12.7 |
| 1 | 5/8 | 15.9 | 5/8 | 15.9 |
| 0 | 1 or more | 25 or more | 1 or more | 25 or more |

(b): Field rating—face rusting (rating)
of area other than scribe and blush)

**0 103 118**

| Rating number | Description and percent failure |
|---|---|
| 10 | No failure |
| 9 | 1% failure |
| 8 | 2% failure or blister |
| 7 | 5% failure, blister or haze |
| 6 | 7—10% failure, blister or haze |
| 5 | 7—10% failure, with spots |
| 4 | 11—25% failure |
| 3 | 26—40% failure |
| 2 | 41—59% failure |
| 1 | 60—75% failure |
| 0 | 75—100% failure |

Rating: 10=Perfect, 1=Poor

TABLE II

Salt spray testing of lucite acrylic lacquer over guide coatings

| Guide coating | Thickness | | Portion[1] of panel | 168 Hours | | | Ratings 336 hours | | |
|---|---|---|---|---|---|---|---|---|---|
| | Guide | Topcoat | | Scribe | Field | Blush | Scribe | Field | Blush |
| | (mils) µm | (mils) µm | | | | | | | |
| 3 | (0.7) 17.8 | (1.5) 38.1 | Top | 10 | 10 | 10 | — | — | — |
| 3 | (0.7) 17.8 | (1.5) 38.1 | Bottom | 10 | 10 | 6 | — | — | — |
| 4 | (0.8) 20.3 | (1.9) 48.3 | Top | 10 | 10 | 10 | 10 | 10 | 10 |
| 4 | (0.8) 20.3 | (1.9) 48.3 | Bottom | 10 | 10 | 5.5 | 10 | 10 | 5 |
| B | (0.8) 20.3 | (2.3) 58.4 | Top | 10 | 10 | 10 | 9 | 10 | 8 |
| B | (0.8) 20.3 | (2.3) 58.4 | Bottom | 10 | 10 | 0 | 9 | 10 | 0 |
| C | (0.8) 20.3 | (2.2) 55.9 | Top | 8 | 10 | 8.5 | 8 | 10 | 8 |
| C | (0.8) 20.3 | (2.2) 55.9 | Bottom | 8 | 10 | 4 | 8 | 10 | 2 |

[1] Bonderite EP-1/P-60 treated Parker test panels, bottom half of panel sanded to bare steel prior to guide coat application.
— Not tested.

The data in Table II clearly indicates the superiority of the compositions of the instant invention as these compositions provide enhanced protection against delamination vis-a-vis commercially used guide coats and those not containing styrene. This is most clearly evidenced by the Blush tests of the bottom half of the panels. Because the steel on the bottom half of the panels does not contain any anti-corrosive treatment, this test section corresponds to those areas of an automobile body where the primer has been damaged and where, therefore, the guide coat must provide protection against corrosion. Thus the

9

compositions of the instant invention possess characteristics which make them particularly useful as guide coats.

**Claims for the Contracting States BE CH DE FR GB IT LI LU NL SE**

1. A copolymer possessing a glass transition temperature of less than about 50°C which is comprised of:
(a) from 10 to 90 weight percent of t-butyl-acrylate units;
(b) from 5 to 50 weight percent of styrene units;
(c) from 1 to 30 weight percent of a functional comonomer units containing at least one active crosslinking site which is capable of reacting with a crosslinker; and
(d) from 0 to 85 weight percent of other ethylenically unsaturated monomer units which are capable of polymerizing with t-butyl acrylate and styrene, wherein the weight percent of components (a) to (d) are based on the total weight of the copolymer.

2. The copolymer of claim 1 wherein t-butyl acrylate units are present in an amount of from 20 to 70 weight percent.

3. The copolymer of claims 1 or 2 wherein styrene units are present in an amount of from 10 to 40 weight percent.

4. The copolymer of any one of claims 1 to 3 wherein the functional monomer units are present in an amount of from 5 to 20 weight percent.

5. The copolymer of any one of claims 1 to 4 wherein the ethylenically unsaturated monomer units, component (d), is present in an amount of from 5 to 50 weight percent.

6. The copolymer of any one of claims 1 to 5 wherein the functional monomer unit is one of acrylic acid, methacrylic acid, hydroxyethyl acrylate, hydroxyethyl methacrylate, hydroxypropyl acrylate, hydroxypropyl methacrylate and mixtures thereof.

7. A coating composition made up of:
(1) a copolymer of any one of claims 1 to 6,
(2) a crosslinker; and
(3) additives.

8. The coating composition of claim 7 wherein the crosslinker, is an etherified amino-formaldehyde resin or a polyepoxide.

9. The coating composition of claim 8 wherein the polyepoxide is a cycloaliphatic epoxide or a diglycidyl epoxide.

**Claims for the Contracting State AT**

1. A process for preparing a copolymer possessing a glass transition temperature of less than about 50°C which is comprised of:
(a) from 10 to 90 weight percent of t-butyl-acrylate units;
(b) from 5 to 50 weight percent of styrene units;
(c) from 1 to 30 weight percent of a functional comonomer units containing at least one active crosslinking site which is capable of reacting with a crosslinker and
(d) from 0 to 85 weight percent of other ethylenically unsaturated monomer units which are capable of polymerizing with t-butyl acrylate and styrene, wherein the weight percent of components (a) through (d) are based on the total weight of the copolymer, by polymerizing a monomer feed comprising t-butyl-acrylate, styrene, a functional comonomer containing at least one active crosslinking site which is capable of reacting with a crosslinker; and optionally other ethylenically unsaturated monomers which are capable of polymerizing with t-butyl acrylate and styrene, in the presence of a catalyst and in the presence of an organic solvent.

2. The process according to claim 1 for producing a copolymer wherein t-butyl acrylate units are present in an amount of from 20 to 70 weight percent.

3. The process according to claim 1 or 2 for producing a copolymer wherein styrene units are present in an amount of from 10 to 40 weight per cent.

4. The process according to any one of claims 1 to 3 for producing a copolymer wherein the functional monomer units are present in an amount of from 5 to 20 weight percent.

5. The process according to any one of claims 1 to 4 for producing a copolymer wherein the ethylenically unsaturated monomer units are present in an amount of from 5 to 50 weight percent.

6. The process according to any one of claims 1 to 5 for producing a copolymer wherein the functional monomer unit is one of acrylic acid, methacrylic acid, hydroxyethyl acrylate, hydroxyethyl methacrylate, hydroxypropyl acrylate, hydroxypropyl methacrylate and mixtures thereof.

7. The use of the copolymer as produced according to any one of claims 1 to 6 in a coating composition made up of
(1) the copolymer,
(2) a crosslinker; and
(3) additives.

8. The use according to claim 7 wherein the crosslinker is an etherified amino-formaldehyde resin or

9. The use according to claim 8 wherein the polyepoxide is a cycloaliphate epoxide or a diglycidyl epoxide.

## Patentansprüche für die Vertragsstaaten BE CH DE FR GB IT LI LU NL SE

1. Copolymerisat mit einer Glasübergangstemperatur von weniger als etwa 50°C enthaltend:

(a) 10 bis 90 Gew.-% t-Butylacrylate-Einheiten;

(b) 5 bis 50 Gew.-% Styrol-Einheiten;

(c) 1 bis 30 Gew.-% von Einheiten eines funktionellen Copolymeren enthaltend zumindest eine aktive, vernetzende Stelle, die mit einem Vernetzungsmittel zu reagieren vermag und

(d) 0 bis 85 Gew.-% anderer ethylenisch ungesättigter monomerer Einheiten, die mit t-Butylacrylat und Styrol zu polymerisieren vermögen, wobei die Mengenangaben der Komponenten (a) bis (d) sich auf das Gesamtgewicht des Copolymeren beziehen.

2. Verfahren nach Anspruch 1, worin 20 bis 70 Gew.-% t-Butylacrylat-Einheiten vorhanden sind.

3. Verfahren nach Anspruch 1 oder 2, worin 10 bis 40 Gew.-% Styrol-Einheiten vorhanden sind.

4. Verfahren nach einem der Ansprüche 1 bis 3, worin 5 bis 20 Gew.-% Einheiten des funktionellen Monomeren vorhanden sind.

5. Verfahren nach einem der Ansprüche 1 bis 4, worin 5 bis 50 Gew.-% Einheiten ethylenisch ungesättigter monomerer Komponente (d) vorhanden sind.

6. Verfahren nach einem der Ansprüche 1 bis 5, worin die Einheiten des funktionellen Monomeren solche von Acrylsäure, Methacrylsäure, Hydroxyethylacrylat, Hydroxyethylmethacrylat, Hydroxypropylacrylat, Hydroxypropylmethacrylat oder deren Mischungen sind.

7. Beschichtungsmasse aus:

(1) einem Copolymeren nach einem der Ansprüche 1 bis 6,

(2) einem Vernetzungsmittel und

(3) Zusätzen.

8. Beschichtungsmasse nach Anspruch 7, worin das Vernetzungsmittel ein verestertes Aminoformaldehydharz oder ein Polyepoxid ist.

9. Verfahren nach Anspruch 8, worin das Polyepoxid ein cycloaliphatisches Epoxid oder ein Diglycidylepoxid ist.

## Patentansprüche für den Vertragsstaat AT

1. Verfahren zur Herstellung eines Copolymerisats mit einer Glasübergangstemperatur von weniger als etwa 50°C enthaltend:

(a) 10 bis 90 Gew.-% t-Butylacrylate-Einheiten;

(b) 5 bis 50 Gew.-% Styrol-Einheiten;

(c) 1 bis 30 Gew.-% von Einheiten eines funktionellen Copolymeren enthaltend zumindest eine aktive, vernetzende Stelle, die mit einem Vernetzungsmittel zu reagieren vermag, und

(d) 0 bis 85 Gew.-% andere ethylenisch ungesättigte monomere Einheiten, die mit t-Butylacrylat und Styrol zu polymerisieren vermögen, wobei die Mengenangaben der Komponenten (a) bis (d) sich auf das Gesamtgewicht des Copolymeren beziehen, durch Polymerisieren einer Monomercharge enthaltend t-Butylacrylat, Styrol, ein funktionelles Comonomer enthaltend zumindest eine aktive vernetzende Stelle, die mit dem Vernetzungsmittel zu reagieren vermag, und gegebenenfalls weitere ethylenisch ungesättigte Monomere, die mit t-Butylacrylat und Styrol zu polymerisieren vermögen, in Gegenwart eines Katalysators und eines organischen Lösungsmittels.

2. Verfahren nach Anspruch 1 zur Herstellung eines Copolymeren, worin die t-Butylacrylateinheiten in einer Menge von 20 bis 70 Gew.-% vorliegen.

3. Verfahren nach Anspruch 1 oder 2 zur Herstellung eines Copolymeren, worin die Styroleinheiten in einer Menge von 10 bis 40 Gew.-% vorliegen.

4. Verfahren nach Anspruch 1 bis 3 zur Herstellung eines Copolymeren, worin die Einheiten der funktionellen Monomeren in einer Menge von 5 bis 20 Gew.-% vorliegen.

5. Verfahren nach einem der Ansprüche 1 bis 4 zur Herstellung eines Copolymeren, worin die Einheiten des ethylenisch ungesättigten Monomeren in einer Menge von 5 bis 50 Gew.-% vorliegen.

6. Verfahren nach einem der Ansprüche 1 bis 5 zur Herstellung eines Copolymeren, worin als Einheit der funktionellen Monomeren eine oder mehrere von Acrylsäure, Methacrylsäure, Hydroxyethylacrylat, Hydroxyethylmethacrylat, Hydroxypropylacrylat und Hydroxypropylmethacrylat verwendet werden.

7. Verwendung des nach einem der Ansprüche 1 bis 6 hergestellten Copolymeren in einer Anstrichsmasse enthaltend

(1) das Copolymer,

(2) ein Vernetzungsmittel und

(3) Zusätze.

8. Verwendung nach Anspruch 7, worin der Vernetzer ein verethertes Aminoformaldehydharz oder ein Polyepoxid ist.

**0 103 118**

9. Verwendung nach Anspruch 8, worin das Polyepoxid ein cycloaliphatisches Epoxid oder ein Glycidylepoxid ist.

**Revendications pour les Etats Contractants BE CH DE FR GB IT LI LU NL SE**

1. Copolymère possédant une température de transition vitreuse inférieure à environ 50°C, qui est formé:
(a) de 10 à 90% en poids de motifs acrylate de tertio-butyle;
(b) de 5 à 50% en poids de motifs styrène;
(c) de 1 à 30% en poids de motifs comonomériques fonctionnels contenant au moins un site actif de réticulation qui est capable de réagir avec un agent de réticulation; et
(d) de 0 à 85% en poids d'autres motifs monomériques à insaturation éthylénique qui sont capables de se polymériser avec l'acrylate de tertio-butyle et le styrène, les pourcentages en poids des composants (a) à (d) étant basés sur le poids total du copolymère.

2. Copolymère suivant la revendication 1, dans lequel les motifs acrylate de tertio-butyle sont présents en une quantité de 20 à 70% en poids.

3. Copolymère suivant la revendication 1 ou 2, dans lequel des motifs styrène sont présents en une quantité de 10 à 40% en poids.

4. Copolymère suivant l'une quelconque des revendications 1 à 3, dans lequel les motifs monomériques fonctionnels sont présents en une quantité de 5 à 20% en poids.

5. Copolymère suivant l'une quelconque des revendications 1 à 4, dans lequel les motifs monomériques à insaturation éthylénique formant le composant (d) sont présents en une quantité de 5 à 50% en poids.

6. Copolymère suivant l'une quelconque des revendications 1 à 5, dans lequel le motif monomérique fonctionnel est l'un des motifs acide acrylique, acide méthacrylique, acrylate d'hydroxyéthyle, méthacrylate d'hydroxyéthyle, acrylate d'hydroxypropyle, méthacrylate d'hydropropyle et leurs mélanges.

7. Composition de revêtement, composé:
(1) d'un copolymère suivant l'une quelconque des revendications 1 à 6,
(2) d'un agent de réticulation; et
(3) d'additifs.

8. Composition de revêtement suivant la revendication 7, dans laquelle l'agent de réticulation est une résine amino-formaldéhydique éthérifiée ou un polyépoxyde.

9. Composition de revêtement suivant la revendication 8, dans laquelle le polyépoxyde est un époxyde cycloaliphatique ou un époxyde diglycidylique.

**Revendications pour l'Etat Contractant AT**

1. Procédé de production d'un copolymère ayant une température de transition vitreuse inférieure à environ 50°C, qui est formé:
(a) de 10 à 90% en poids de motifs acrylate de tertio-butyle;
(b) de 5 à 50% en poids de motifs styrène;
(c) de 1 à 30% en poids d'un motif comonomérique fonctionnel contenant au moins un site actif de réticulation qui est capable de réagir avec un agent de réticulation; et
(d) de 0 à 85% en poids d'autres motifs monomériques à insaturation éthylénique qui sont capables de se polymériser avec l'acrylate de tertio-butyle et de styrène, le pourcentage en poids des composants (a) à (d) étant basé sur le poids total du copolymère, par polymérisation d'une charge monomérique comprenant de l'acrylate de tertio-butyle, du styrène, un comonomère fonctionnel contenant au moins un site actif de réticulation qui est capable de réagir avec un agent de réticulation; et le cas échéant, d'autres monomères à insaturation éthylénique qui sont capables de se polymériser avec l'acrylate de tertio-butyle et le styrène, en présence d'un catalyseur et en présence d'un solvant organique.

2. Procédé suivant la revendication 1, pour la production d'un copolymère dans lequel des motifs acrylate de tertio-butyle sont présents en une quantité de 20 à 70% en poids.

3. Procédé suivant la revendication 1 ou 2 pour la production d'un copolymère dans lequel des motifs styrène sont présents en une quantité de 10 à 40% en poids.

4. Procédé suivant l'une quelconque des revendications 1 à 3, pour la production d'un copolymère dans lequel des motifs monomériques fonctionnels sont présents en une quantité de 5 à 20% en poids.

5. Procédé suivant l'une quelconque des revendications 1 à 4, pour la production d'un copolymère dans lequel les motifs monomériques à insaturation éthylénique sont présents en une quantité de 5 à 50% en poids.

6. Procédé suivant l'une quelconque des revendications 1 à 5, pour la production d'un copolymère dans lequel le motif monomérique fonctionnel est l'un des motifs acide acrylique, acide méthacrylique, acrylate d'hydroxyéthyle, méthacrylate d'hydroxyéthyle, acrylate d'hydroxypropyle, méthacrylate d'hydroxypropyle et leurs mélanges.

12

**0 103 118**

7. Utilisation du copolymère tel qu'obtenu conformément à l'une quelconque des revendications 1 à 6 dans une composition de revêtement formée

(1) du copolymère,

(2) d'un agent de réticulation; et

(3) d'additifs.

8. Utilisation suivant la revendication 7, dans laquelle l'agent de réticulation est une résine aminoformaldéhydique éthérifiée ou un polyépoxyde.

9. Utilisation suivant la revendication 8, dans laquelle le polyépoxyde est un époxyde cycloaliphatique ou un époxyde diglycidylique.